Europäisches Patentamt

(19) European Patent Office

Office européen des brevets

(11) Numéro de publication: **0 125 182**
**B1**

# (12) FASCICULE DE BREVET EUROPEEN

(45) Date de publication du fascicule du brevet:
**19.11.87**

(21) Numéro de dépôt: **84400914.2**

(22) Date de dépôt: **04.05.84**

(51) Int. Cl.⁴: **G 02 F 1/29,** G 02 F 1/03

(54) **Coupleur directif électro-optique à trois électrodes et à déphasage alterne.**

(30) Priorité: **10.05.83 FR 8307807**

(43) Date de publication de la demande:
**14.11.84 Bulletin 84/46**

(45) Mention de la délivrance du brevet:
**19.11.87 Bulletin 87/47**

(84) Etats contractants désignés:
**DE GB NL SE**

(56) Documents cités:
**DE - A - 3 202 932**
**FR - A - 2 314 513**
**US - A - 3 909 108**

**APPLIED PHYSICS LETTERS, vol. 28, no. 9, 1er mai 1976,**
**American Institute of Physics, New York (US);**
**R.V.SCHMIDT et al.: "Electro-optically switched**
**coupler with stepped delta beta reversal using**
**Ti-diffused LiNb03 waveguides", pages 503-506**

(73) Titulaire: **L'Etat Français, représenté par le Ministre des**
**P.T.T. (Centre National d'Etudes des**
**Télécommunications), 38-40 rue du Général Leclerc,**
**F-92131 Issy-Les-Moulineaux (FR)**

(72) Inventeur: **Baratte, Hervé, 15 Bis, rue Montaleau,**
**F-94370 Sucy-en-Brie (FR)**
Inventeur: **Lesterlin, Dominique, Vision 80 La Défense**
**No. 2 2 Place des Reflets, F-92400 Courbevoie (FR)**
Inventeur: **Carenco, Alain, 4, rue Paul-Henri Thilloy,**
**F-92340 Bourg La Reine (FR)**

(74) Mandataire: **Mongrédien, André et al, c/o**
**BREVATOME 25, rue de Ponthieu, F-75008 Paris (FR)**

# Description

La présente invention a pour objet un coupleur directif électro-optique. Elle trouve une application en optique intégrée.

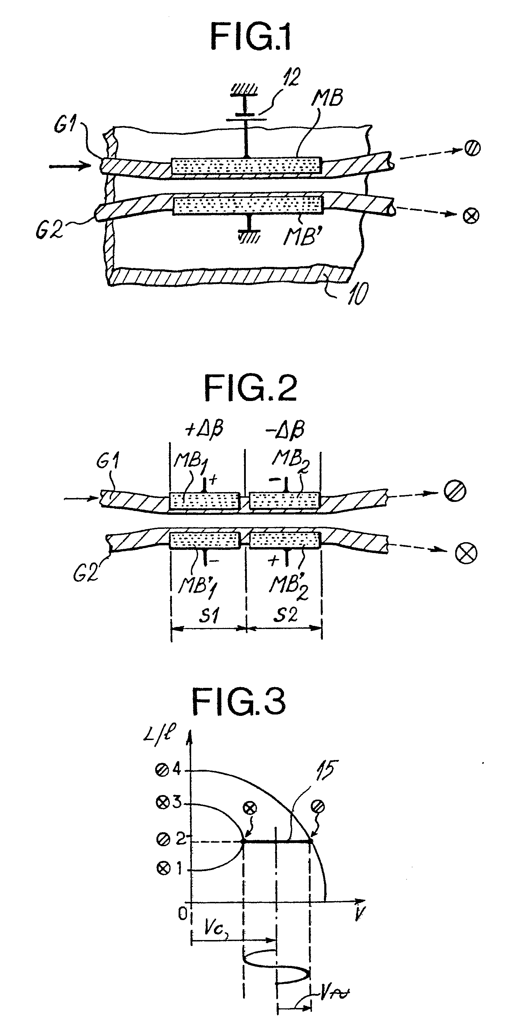

Parmi les diverses formes que peut prendre un coupleur directif électro-optique, la plus simple est celle qui est représentée sur la figure 1. Il s'agit d'un dispositif comprenant une structure de propagation de la lumière, constituée par un substrat 10 contenant deux guides d'onde optiques G1 et G2 réalisés en un matériau électro-optique. Cette structure est recouverte par une structure d'électrodes comprenant deux microbandes conductrices MB et MB' déposées sur le substrat et recouvrant au moins partiellement les deux guides optiques. L'une des électrodes est reliée à une source de tension continue 12, l'autre à la masse. La lumière pénètre par le guide G1 et ressort par l'un et/ou l'autre des guides. Pour des raisons de commodité d'accès, les guides s'éloignent l'un de l'autre à leurs extrémités suivant la forme évasée représentée sur la figure 1.

Le fonctionnement de ce dispositif est le suivant. Les deux guides sont suffisamment proches l'un de l'autre pour que, par onde évanescente, un couplage existe entre eux. Dans chaque guide, la propagation de la lumière est caractérisée par une constante de propagation, respectivement $\beta_1$ et $\beta_2$, dont la valeur peut être modifiée par application d'un champ électrique. Lorsque deux champs différents sont appliqués aux deux guides, un «déphasage» $\Delta\beta = \beta_1 - \beta_2$ apparaît. On définit alors une longueur de transfert $l$ égale à $\pi/2k$, où k est le coefficient de couplage entre guides: c'est la longueur minimum des guides nécessaire à l'obtention d'un transfert total de la lumière d'un guide vers l'autre. Si le déphasage $\Delta\beta$ est nul, on obtient un transfert total du guide d'entrée G1 vers le guide G2, lorsque la longueur totale du dispositif L est un multiple entier impair de la longueur de transfert $l$. La lumière incidente pénètrant dans le guide G1 ressort alors par le guide G2. Cet état sera désigné par «état croisé» et sera noté $\otimes$. Si la longueur L du coupleur est un multiple pair de $l$, la lumière ressort par le guide G1. Cet état sera désigné par «état direct» et sera noté O.

En appliquant une tension à l'une des électrodes, on modifie le déphasage $\Delta\beta$, et l'on peut passer d'un état croisé à un état direct. En d'autres termes, on réalise une modulation de l'intensité lumineuse extraite de l'un des guides.

Une variante plus élaborée de ce dispositif est représentée sur la figure 2. Selon cette variante, deux sections identiques S1 et S2 sont constituées de microbandes $M_1$, $M_1'$ et $M_2$, $M_2'$. Ces sections présentent des déphasages alternés $+\Delta\beta$ et $-\Delta\beta$, l'alternance étant obtenue en permutant les connexions électriques d'une section à l'autre.

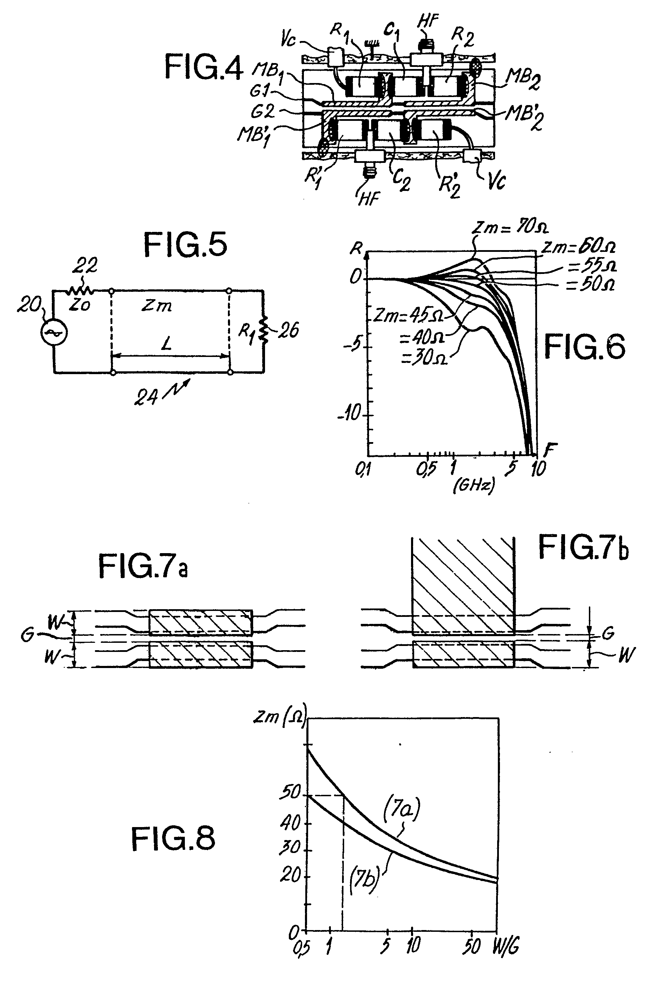

Le fonctionnement de ce dispositif est illustré par le diagramme de la figure 3, qui représente les divers états du dispositif en fonction de deux paramètres, le premier $\dfrac{\Delta\beta L}{\pi}$ , proportionnel à la tension V appliquée et qui est porté en abscisses, et le second L/l qui est fixé pour une configuration donnée et qui est porté en ordonnées. Lorsqu'on module la tension V, le point représentatif du système se déplace sur un segment horizontal. Les lignes marquées sur le diagramme correspondent aux états purement croisés ou purement directs. De préférence, on choisit un segment de modulation tel que 15, qui s'étend entre un état croisé et un état direct. Cette modulation peut être obtenue en appliquant une tension de polarisation continue Vc superposée à une tension alternative Vα.

L'intérêt de cette structure, dite à déphasage alterné, est de conduire à une tolérance assez grande sur la longueur de la zone active. Le dispositif élémentaire de la figure 1 exigeait au contraire une très grande précision de fabrication. Par ailleurs, avec un coupleur à déphasage alterné le fonctionnement est possible dans une large bande spectrale.

Toutes ces considérations sont connues de l'homme de l'art et sont développées, par exemple, dans l'article de H. Kogelnik et R.V. Schmidt, intitulé «Switched Directional Couplers with Alternating $\Delta\beta$», publié dans la revue IEEE Journal of Quantum Electronics, vol. QE-12, n° 7, Juillet 1976, pages 396–401.

En pratique, pour alimenter un coupleur directif à déphasage alterné, on s'y prend comme illustré sur la figure 4: une tension continue Vc est appliquée aux microbandes $MB_1$ et $MB_2'$ à travers des résistances $R_1$ et $R_2'$ (par exemple de 10kΩ); une tension haute fréquence est appliquée aux microbandes $MB_1$ et $MB_2'$ par des condensateurs $C_1$ et $C_2$ (par exemple de 33nF) et aux microbandes $MB_1'$ et $MB_2$ par des résistances $R_1'$ et $R_2'$ (par exemple de valeur 50Ω). Les valeurs des éléments résistifs et capacitifs sont choisies pour que la structure globale soit adaptée en impédance au générateur haute fréquence d'alimentation.

Avec un matériau électrooptique connu tel que $LiNbO_3$ Ti et avec un rayonnement lumineux à 1,06 μm, on obtient, avec un tel dispositif, une largeur de bande de modulation de 2,5 GHz.

Un tel dispositif est décrit par P. Thioulouse, A. Carenco et R. Guglielmi dans un article intitulé «High-Speed Modulation of an Electrooptic Directional Coupler» publié dans «IEEE Journal of Quantum Electronics», vol. QE-17, n° 4, Avril 1981, pages 535–541.

Bien que de tels dispositifs donnent satisfaction, ils se heurtent néanmoins à une difficulté lorsqu'on cherche à augmenter encore la largeur de la bande de la modulation. Le temps de réponse du circuit élastique est en effet limité par la valeur des constantes localisées des électrodes et de leurs éléments d'adaptation (circuit R, L, C équivalent).

Pour éviter cette difficulté, il a été proposé d'utiliser, comme structure d'électrodes, des microbandes adaptées à l'impédance de la source formant ligne de propagation pour l'onde électrique d'alimentation. On obtient alors une structure à onde progressive dans laquelle l'interaction électrooptique se maintient d'un bout à l'autre des guides, la limitation ultime étant constituée par la différence des vitesses de propagation de l'onde optique et de l'onde électrique dans le matériau considéré.

Le schéma électrique équivalent d'une telle structure est représenté sur la figure 5. Le générateur 20 possède une impédance interne 22 de valeur Zo, la ligne de propagation 24, formée par les microbandes, présente une impédance caractéristique Zm et cette ligne est bouclée sur une résistance de charge 26 de valeur $R_1$.

Les caractéristiques d'une telle structure sont décrites dans l'article de K. Kubota, J. Noda et O. Mikani intitulé «Traveling Wave Optical Modulator Using a Directional Coupler LiNbO3 Waveguide» publié dans «IEEE Journal of Quantum Electronics», vol. QE-16, n° 7, Juillet 1980, pages 754–760.

Dans une telle structure, la largeur de bande offerte pour la modulation dépend de l'impédance caractéristique de la ligne formée par les microbandes. Ce résultat est illustré sur le graphique de la figure 6, tiré de la dernière référence. La fréquence est portée en abscisses et exprimée en GHz et la réponse de la structure en ordonnées. Les courbes correspondent à une impédance interne Zo du générateur égale à 50 Ohms, une résistance de charge $R_1$ de 50 Ohms et une longueur d'électrodes de 16 mm. Les courbes correspondent à différentes valeurs de l'impédance caractéristique Zm de la ligne. Lorsque Zm est inférieure à 50 Ω, la largeur de bande à 3dB se rétrécit. Au-dessus de 50 Ω, la largeur de bande est à peu près la même qu'à 50 Ω mais la désadaptation de la ligne provoque l'apparition d'un taux d'onde stationnaire et d'une réflexion de l'onde électrique préjudiciable au bon fonctionnement de l'ensemble. En pratique donc, on donnera à la ligne électrique une impédance caractéristique de 50 Ω. La largeur de bande sera alors portée à environ 3,6 GHz.

Le problème est alors de concevoir une structure d'électrodes présentant une impédance donnée. La question n'est pas simple du fait de la forme très particulière de la ligne, formée de deux microbandes conductrices parallèles déposées sur un substrat isolant. Le dernier article cité envisage le cas de deux structures particulières, respectivement symétrique et asymétrique, qui sont représentées sur les figures 7a et 7b. La première est formée de deux microbandes identiques, de largeur W, espacées d'un intervalle G. La seconde est formée d'une microbande de largeur W, et d'une microbande de largeur très grande devant W, les deux bandes étant séparées par un intervalle G. L'impédance caractéristique Zm de chacune de ces lignes est représentée sur le diagramme de la figure 8 où W/G est porté en abscisses et Zm en ordonnées. Les deux courbes correspondent aux deux cas des figures 7a et 7b. Pour la ligne symétrique, on obtient une impédance caractéristique de 50 Ω pour $\frac{W}{G} = 1,6$ alors que pour la structure asymétrique W/G doit être proche de 0,5 pour obtenir la même impédance. D'où ce résultat que, à impédance donnée, la largeur W est beaucoup plus faible dans une structure asymétrique que dans une structure symétrique.

A titre d'exemple, on peut choisir, pour obtenir une impédance de 50 Ω:
– une ligne symétrique telle que:
G= 5       W= 8
G=13       W=20,8
– une ligne asymétrique telle que:
G= 5       W=2,5
G=13       W=6,5
le tout exprimé en micromètres.

Du fait de ses électrodes plus larges, la ligne symétrique offre les avantages suivants sur la signe asymétrique:
– le recouvrement de guides optiques larges et faiblement séparé (α court) est possible avec une efficacité électrooptique convenable,
– les pertes électriques sont plus faibles,
– la bande passante, qui est affectée également par les pertes comme le montre le dernier article cité, est plus large,
– la fabrication est facilitée.

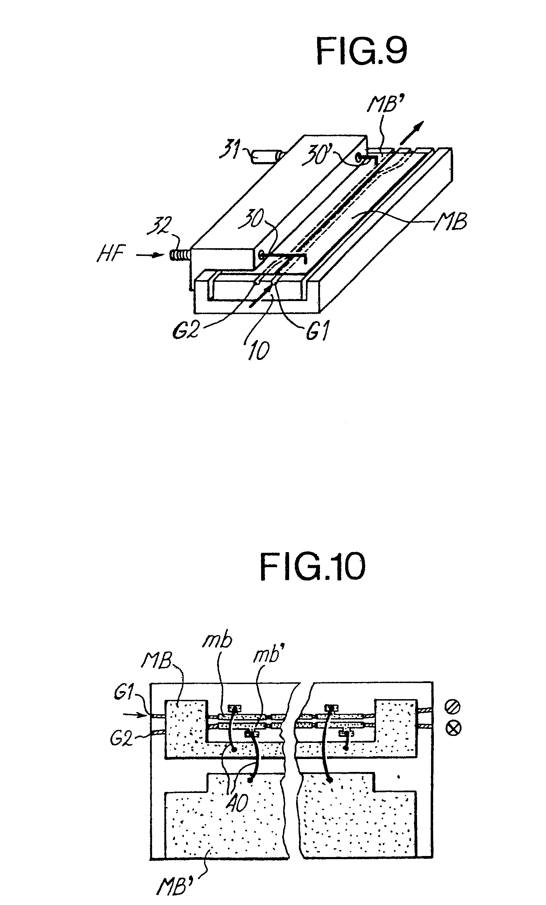

Pratiquement, un coupleur directif électrooptique à one progressive se présente comme illustré sur la figure 9: l'une des microbandes MB reçoit, à l'une de ses extrémités, l'onde électrique d'excitation par le conducteur central 30 d'un coaxial 32, le conducteur extérieur de ce coaxial étant à la masse et étant relié à l'autre microbande MB'. L'onde électrique est extraite à l'autre extrémité de la ligne par un conducteur 30' et est dissipée dans une charge adaptée 31 de 50 Ω.

On observa soigneusement que les coupleurs à onde progressive qui viennent d'être décrits sont des dispositifs à une seule section et qu'il n'a pas été question d'utiliser la structure à déphasage alterné, telle qu'elle a été représentée sur la figure 2. C'est qu'en effet les deux structures se concilient très difficilement. Cependant, un dispositif a été proposé, pour tirer parti simultanément des qualités de la structure à déphasage alterné et des avantages de la structure à onde progressive. Ce dispositif est décrit dans un article de U. Langmann et D. Hoffmann, intitulé «200 ps stepped-$\Delta\beta$-operation of an integrated optical directional coupler switch» publié dans les Comptes-Rendus du 8e Congrès European Conference on Optical Communication ECOC de Cannes (1982, session BIII, optique intégrée, pages 234–237).

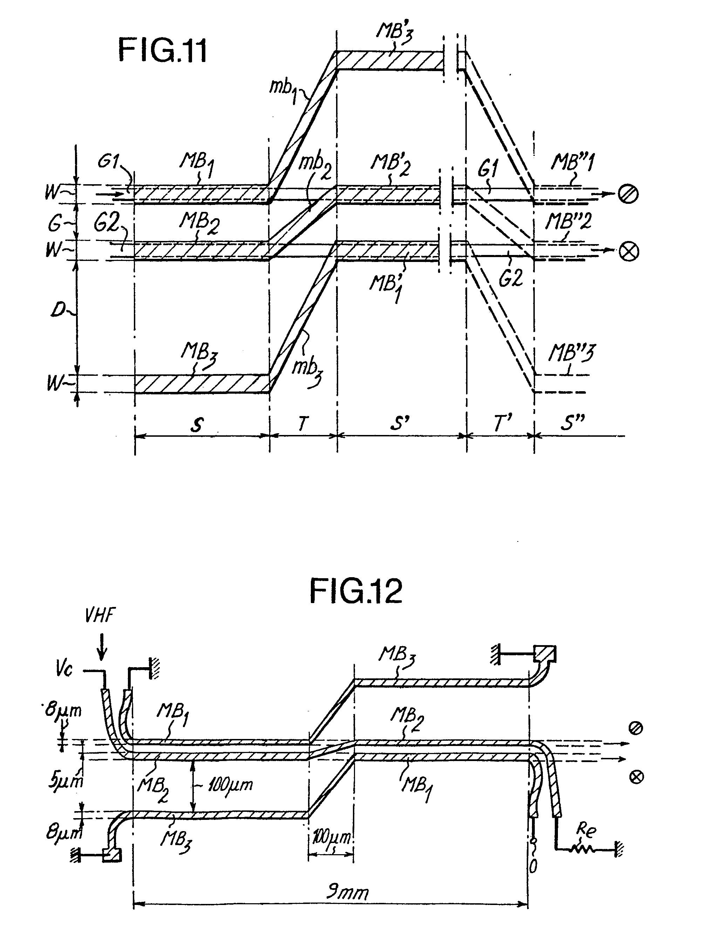

Ce dispositif est représenté sur la figure 10. Il comprend une structure d'électrodes asymétriques MB, MB' alimentée par un générateur d'onde haute fréquence et une structure de guidage optique formée de deux guides G1 et G2, qui ne sont pas situés sous les bandes MB et MB' mais sous des microbandes mb, mb'. Ces dernières sont reliées aux bandes MB et MB' par des conducteurs 40, de manière à ce que les microbandes mb, mb' recouvrant l'un des guides soient reliées alternativement à l'une et à l'autre des bandes MB et MB'.

La combinaison de la structure progressive et de la structure à déphasage alternée est donc obtenue en juxtaposant deux sous-ensembles remplissant les deux fonctions en question et en les réunissant par des conducteurs alternés.

Cette structure présente de nombreux inconvénients:

– elle est manifestement d'une grande complexité,

– le recouvrement entre les structures électrique et optique est mauvais,

– la ligne à onde progressive est asymétrique, ce qui conduit aux inconvénients énoncés plus haut,

– les connexions 40, qui introduisent des impédances parasites, limitent le fonctionnement en haute fréquence.

Après cet exposé de l'art antérieur, il faut retenir qu'il est très difficile de réunir, dans une même structure, les avantages des coupleurs à onde progressive et ceux des coupleurs à déphasage alterné.

La présente invention a justement pour but de résoudre ce problème en proposant une structure très simple, à ligne de propagation symétrique et à déphasage alterné. En tant que structure progressive, elle conduit à une très large bande passante; étant symétrique, elle possède des pertes réduites, avec les avantages qui en découlent (cf supra); enfin, étant à déphasage alterné, les tolérances sur la longueur des sections ne sont pas rigoureuses. Tous ces buts sont atteints, selon l'invention, grâce à une structure qui se caractérise par trois points:

a) la structure d'électrodes comprend, dans chaque section, trois microbandes parallèles, de même largeur, la première et la seconde de ces microbandes recouvrant respectivement le premier et le second guides optiques et étant séparées par une largeur donnant à la ligne de propagation qu'elles constituent une impédance caractéristique égale à l'impédance d'adaptation souhaitée; la troisième microbande est suffisamment écartée de la deuxième pour que sa contribution à ladite impédance caractéristique soit négligeable; par ailleurs, la première et la troisième microbandes sont reliées électriquement au conducteur extérieur de la ligne d'alimentation et la deuxième microbande au conducteur central de cette ligne;

b) le recouvrement du premier et du second guides optiques par les premières et deuxième microbandes présente une alternance d'une section à la suivante, en ce sens que, pour une première section, c'est la première microbande qui recouvre le premier guide et la seconde microbande qui recouvre le second guide, tandis que pour une seconde section, consécutive à la première, c'est la deuxième microbande qui recouvre le premier guide et la première microbande qui recouvre le second guide;

c) le passage d'une première section à une deuxième section est obtenu par une zone de transition comprenant: un premier tronçon de microbande incliné reliant la première microbande de la première section à la troisième microbande de la deuxième section, un deuxième tronçon de microbande incliné reliant la deuxième microbande de la première section à la deuxième microbande de la deuxième section et un troisième tronçon de microbande incliné reliant la troisième microbande de la première section à la première microbande de la deuxième section.

Les caractéristiques d'un tel dispositif apparaîtront mieux après la description qui suit, d'un exemple de réalisation donné à titre explicatif et nullement limitatif. Cette description se réfère à des dessins annexés, qui contiennent des figures déjà décrites, à savoir:

– la figure 1 représente un coupleur directif connu de type simple,

– la figure 2 représente un coupleur directif connu à déphasage alterné,

– la figure 3 est un diagramme explicatif du fonctionnement du coupleur précédent,

– la figure 4 représente un mode particulier de réalisation d'un coupleur à deux sections avec ses composants d'interconnexion, selon l'art antérieur,

– la figure 5 représente le schéma électrique équivalent à une structure à ondes progressives,

– la figure 6 est un diagramme illustrant le comportement en fréquence d'une structure à onde progressive en fonction de son impédance caractéristique,

– les figures 7a et 7b montrent des structures d'électrodes symétrique et asymétrique,

– la figure 8 est un diagramme illustrant la variation d'impédance des structures précédentes en fonction de leurs dimensions,

– la figure 9 illustre un mode de réalisation d'un coupleur à onde progressive, selon l'art antérieur,

– la figure 10 représente une tentative connue pour combiner une structure à onde progressive et une structure à déphasage alterné,

– la figure 11 représente la structure utilisée selon l'invention,

– la figure 12 illustre un exemple de réalisation d'un coupleur selon l'invention,

– la figure 13 représente diverses étapes d'un procédé de fabrication du dispositif de l'invention.

Le coupleur de la figure 11 comprend deux sections S et S' (mais il pourrait en comporter davantage, S'' etc...) et une zone de transition T. La structure d'électrodes comprend, dans chaque section, une première, une deuxième et une troisième microbandes parallèles, de même largeur W, respectivement $MB_1$, $MB_2$ et $MB_3$. La première ($MB_1$) et la seconde ($MB_2$) de ces microbandes recouvrent respectivement le premier et le second guides optiques $G_1$ et $G_2$. Ces deux microbandes sont séparées par un intervalle de largeur G donnant à la ligne de propagation constituée par ces deux microbandes une impédance caractéristique égale à l'impédance d'adaptation souhaitée, c'est-à-dire, en pratique, 50 $\Omega$. La courbe de la figure 8 permet de déterminer W/G. Les exemples donnés plus haut peuvent être retenus. La troisième microbande, $MB_3$, est suffisamment écartée de la deuxième, $MB_2$, pour que sa contribution à ladite impédance caractéristique soit négligeable. En pratique, on donnera à l'intervalle entre $MB_2$ et

MB$_3$ une valeur D supérieur à 10 fois la valeur de G et par exemple égale à 20 G. La première et la troisième microbandes (MB$_1$, MB$_3$) sont reliées électriquement au conducteur extérieur de la ligne d'alimentation, c'est-à-dire, en pratique, à la masse et la deuxième microbande, au conducteur central de cette ligne.

La seconde section du dispositif comprend, comme la première, trois microbandes MB$_1'$, MB$_2'$, MB$_3'$. Les deux premières MB$_1'$ et MB$_2'$ sont écartées d'un intervalle G et la deuxième et la troisième MB$_2'$ et MB$_3'$ de D. Mais, dans cette seconde section et selon la deuxième caractéristique du dispositif de l'invention, le recouvrement du premier et du second guides optiques par les première et seconde microbandes MB$_1'$ et MB$_2'$ est symétrique de ce qu'il est dans la première. Cela signifie que, pour la première section S c'était la première microbande MB$_1$ qui recouvrait le premier guide G1 et la seconde microbande MB$_2$ le second guide G2, tandis que pour la seconde section, c'est la deuxième microbande MB$_2'$ qui recouvre le premier guide G1 et la première microbande MB$_1'$ qui recouvre le second guide G2.

Le passage entre la première section S et la deuxième S' s'effectue par une zone de transition T comprenant: un premier tronçon de microbande mb$_1$ reliant la première microbande MB$_1$ de la première section S à la troisième microbande MB$_3'$ de la deuxième section S', un deuxième tronçon de microbande mb$_2$ reliant la deuxième microbande MB$_2$ de la première section S à la deuxième microbande MB$_2'$ de la deuxième section, et un troisième tronçon de microbande mb$_3$ reliant la troisième microbande MB$_3$ de la première section à la première microbande MB$_1'$ de la deuxième section.

Naturellement, cette zone de transition T perturbe la propagation dans la ligne. Mais on observera qu'à ses deux extrémités, cette zone de transition présente une impédance de 50 $\Omega$, de sorte que, si elle est assez courte, la désadaptation qu'elle introduit est faible. Par ailleurs, en son centre, cette zone de transition est formée de deux lignes en parallèle formées de deux conducteurs écartés de $\frac{G+D}{2}$ et il est toujours possible de choisir D pour que l'impédance de chacune de ces parties soit de 100 $\Omega$, afin que l'ensemble présente une impédance de 50 $\Omega$. La variation d'impédance le long de la zone de transition est alors pratiquement nulle, puisque cette impédance est égale à 50 $\Omega$ à chaque extrémité et au centre.

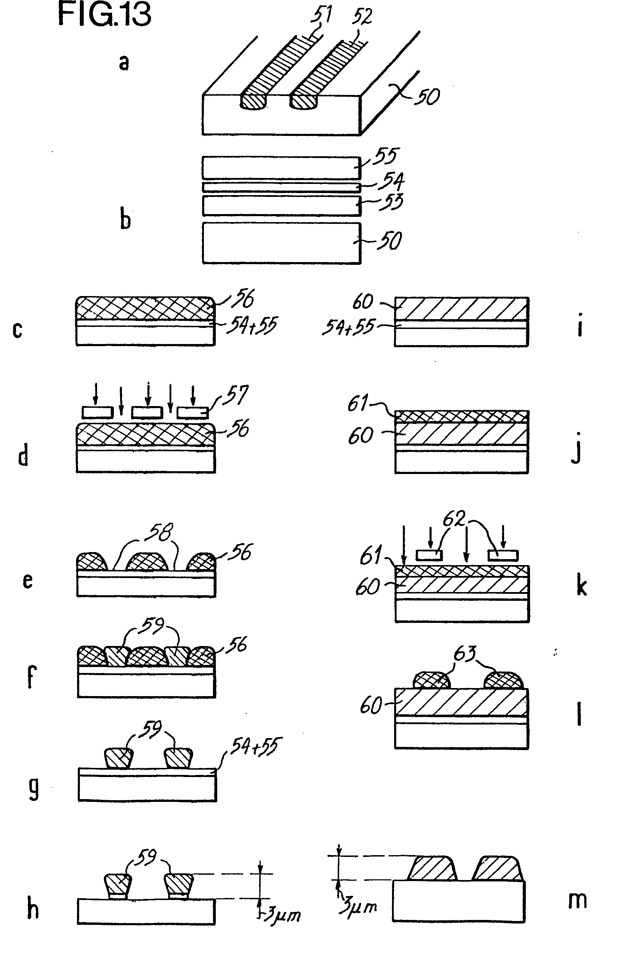

La figure 12 montre un exemple de réalisation, qui n'est pas à l'échelle pour plus de clarté. Il correspond à W=8 $\mu$m et D=100 $\mu$m. La longueur totale de la zone d'interaction est de 9 mm et la longueur de la zone de transition est de 100 $\mu$m. Pour faciliter les connexions électriques, les électrodes sont courbées pour dégager les entrées-sorties optiques.

La figure 13 représente diverses étapes d'un procédé de fabrication pouvant être utilisé pour réaliser le dispositif qui vient d'être décrit. Le procédé comprend essentiellement les opérations suivantes:

1. Préparation d'un échantillon de niobate de lithium et coupe selon l'axe z < 001 >.

2. Diffusion de titane à haute température dans deux rubans correspondant aux futurs guides d'onde optique; l'opération s'effectue dans une enceinte contenant du lithium et de l'oxygène; la durée est de 10 h environ et la température de 1000 °C. On obtient, sur un substrat 50 des guides 51, 52 (figure a).

3. Dépôt d'une couche d'isolement en SiO$_2$ et d'une couche d'accrochage en Ti/Au par pulvérisation cathodique; sur la figure b le substrat 50 est en LiNbO$_3$, la couche 53 en SiO$_2$ de 300 nm, la couche 54 en Ti (20 nm) et la couche 55 en Au (200 nm).

4. Définition d'un masque selon l'une ou l'autre de deux techniques: masque négatif ou masque positif. Selon la variante utilisée, le procédé se poursuit selon deux voies différentes correspondant respectivement aux figures c à h de la colonne de gauche et aux figures i à m de la colonne de droite.

A. Cas de l'utilisation d'un masque négatif:

A5) Dépôt d'une réserve négative épaisse 56 d'épaisseur supérieure à 3 $\mu$m (figure c),

A6) Mise en place du masque au chrome 57, dont les parties vides dessinent les électrodes et insolation par des ultraviolets (figure d),

A7) Retrait des zones 58 insolées (figure e), A8) Remplissage des vides par de l'or 59, par électrolyse (figure f),

A9) Dégagement de la résine pour ne laisser subsister que des dépôts d'or 59 correspondant aux microbandes (figure g),

A10) Usinage ionique de l'or et de la couche d'accrochage Ti/Au (figure h),

B. Cas de l'utilisation d'un masque positif:

B5) Dépôt par électrolyse d'une couche d'or uniforme 60 (figure i),

B6) Dépôt d'une résine positive mince 61 (1$\mu$m) (figure j),

B7) Mise en place d'un masque positif 62, alignement et insolation; les parties pleines dessinent les futures électrodes (figure k),

B8) Retrait des zones non insolées, ce qui laisse des microbandes 63 (figure l),

B9) Usinage ionique de la couche d'or et de la couche d'accrochage Ti/Au (figure m).

**Revendication**

1. Coupleur directif électrooptique, du genre de ceux qui comprennent une structure de propagation de la lumière constituée par un substrat contenant un premier guide d'onde optique (G1) et un second guide d'onde optique (G2) parallèle au premier, cette structure étant recouverte par une structure d'électrodes comprenant au moins deux microbandes conductrices déposées sur le substrat et recouvrant chacune au moins partiellement l'un des deux guides optiques, ces microbandes ayant une extrémité électriquement reliée respectivement au conducteur central et au conducteur extérieur d'une ligne d'alimentation coaxiale elle-même reliée à un générateur d'onde électrique, l'autre extrémité des microbandes étant reliée à une charge adaptée, cette structure d'électrodes se comportant, pour l'onde électrique d'alimentation, comme une ligne de propagation ayant une certaine impédance caractéristique, les dimensions des microbandes, c. à d. largeur et écartement, étant choisies pour que cette impédance caractéristique ait une valeur déterminée d'adaptation, ce coupleur étant caractérisé en ce que, afin de pouvoir utiliser une structure à déphasage alterné comprenant une suite de sections dans lesquelles les déphasages entre les ondes optiques se propageant dans les deux guides ont des signes opposés,

a) la structure d'électrodes comprend, dans chaque section, une première, une deuxième et une troisième microbandes parallèles entre elles (MB$_1$, MB$_2$, MB$_3$) de même largeur, la deuxième microbande étant interposée entre la première et la troisième, la première (MB$_1$) et la seconde (MB$_2$) de ces microbandes recouvrant le premier (G1) et le second (G2) guides optiques, ces deux microbandes étant séparées par une largeur donnant à la ligne de propagation constituée par ces deux microbandes une impédance caractéristique égale à l'impédance d'adaptation souhaitée, la troisième microbande étant suffisamment écartée de la deuxième pour que sa contribution à ladite impédance caractéristique soit négligeable, la première et la troisième microbandes étant reliées électriquement au conducteur extérieur de la ligne d'alimentation et la deuxième microbande au conducteur central de cette ligne,

b) le recouvrement du premier (G1) et du second (G2) guides optiques par les première et deuxième microbandes alterne d'une section à la suivante en ce sens que, pour une première section, c'est la première microbande (MB$_1$) qui recouvre le premier guide (G1) et la seconde microbande (MB$_2$) qui recouvre le second guide (G2), tandis que pour une seconde section (S') consécutive à la première (S), c'est la deuxième microbande (MB$_2$') qui recouvre le premier guide (G1) et la première microbande (MB$_1$') qui recouvre le second guide (G2),

c) le passage entre la première section et la deuxième section est obtenu par une zone de transition comprenant: un premier tronçon de microbande incliné (mb$_1$) reliant la première microbande (MB$_1$) de la première section (S) située sur le premier guide optique (G1) à la troisième microbande (MB$_3$') de la deuxième section (S'), un deuxième tronçon de microbande incliné (mb$_2$) reliant la deuxième microbande (MB$_2$) de la première section (S) située sur le second guide optique (G2) à la deuxième microbande (MB$_2$') de la deuxième section (S') située sur le premier guide optique (G1) et un troisième tronçon de microbande incliné (mb$_3$) reliant la troisième microbande (MB$_3$) de la première section (S) à la première microbande (MB$_1$') de la deuxième section (S') située sur le second guide optique (G2).

## Patentanspruch

1. Elektrooptischer Richtkoppler, enthaltend einen Lichtleiteraufbau, der von einem Substrat gebildet ist, das einen ersten optischen Wellenleiter (G1) und einen zum ersten parallelen zweiten optischen Wellenleiter (G2) aufweist, wobei dieser Aufbau von einer Elektrodenanordnung bedeckt ist, die wenigstens zwei leitfähige Mikrobänder enthält, die auf dem Substrat angeordnet sind und jeweils wenigstens teilweise einen der zwei optischen Leiter bedecken, wobei die Mikrobänder ein Ende aufweisen, das elektrisch jeweils mit einem Mittelleiter und einem Aussenleiter einer koaxialen Versorgungsleitung verbunden ist, die ihrerseits mit einem elektrischen Wellengenerator verbunden ist, wobei das andere Ende der Mikrobänder mit einer angepassten Last verbunden ist, wobei diese Elektrodenanordnung sich für die elektrische Versorgungswelle wie eine Ausbreitungsleitung verhält, die eine gewisse charakteristische Impedanz hat, wobei die Abmessungen der Mikrobänder, d.h. ihre Breite und ihr gegenseitiger Abstand derart gewählt sind, dass diese charakteristische Impedanz einen Wert hat, der durch die Anpassung bestimmt ist, dadurch gekennzeichnet, dass für die Ermöglichung, einen Aufbau mit wechselnder Phase zu verwenden, der eine Folge von Sektionen aufweist, in deren die Phasenabweichungen zwischen den sich in den zwei Leitern fortpflanzenden optischen Wellen zueinander entgegengesetzte Vorzeichen haben,

a) die Elektrodenanordnung in jeder Sektion ein erstes, ein zweites und ein drittes zueinander paralleles Mikroband (MB$_1$, MB$_2$, MB$_3$) gleicher Breite aufweist, wobei das zweite Mikroband zwischen dem ersten und dem dritten Mikroband liegt, das erste (MB$_1$) und das zweite (MB$_2$) dieser Mikrobänder den ersten (G1) und den zweiten (G2) optischen Leiter bedeckt, diese beiden Mikrobänder durch einen Abstand voneinander getrennt sind, der der von diesen beiden Mikrobändern gebildeten Ausbreitungsleitung eine charakteristische Impedanz gibt, die gleich der gewünschten Anpassungsimpedanz ist, das dritte Mikroband von dem zweiten Mikroband ausreichend entfernt ist, dass ihr Beitrag zu der genannten charakteristischen Impedanz vernachlässigbar ist, die ersten und dritten Mikrobänder elektrisch mit dem Aussenleiter der Versorgungsleitung und das zweite Mikroband mit dem Mittelleiter dieser Leitung verbunden sind,

b) die Bedeckung des ersten und des zweiten optischen Leiters (G1 bzw. G2) durch die ersten und zweiten Mikrobänder von einer Sektion zur folgenden in einem solchen Sinne wechselt, dass für eine erste Sektion das erste Mikroband (MB$_1$) den ersten Leiter (G1) bedeckt und das zweite Mikroband (MB$_2$) den zweiten Leiter (G2) bedeckt, während in einer zweiten, der ersten Sektion (S) folgenden Sektion (S') das zweite Mikroband (MB$_2$') den ersten Leiter (G1) und das erste Mikroband (MB$_1$') den zweiten Leiter (G2) bedeckt,

c) der Übergang zwischen der ersten Sektion und der zweiten Sektion wird durch eine Übergangszone erhalten, enthaltend: einen ersten, geneigten Mikrobandabschnitt ($mb_1$), der das erste Mikroband ($MB_1$) der ersten Sektion (S), das auf dem ersten optischen Leiter (G1) angeordnet ist, mit dem dritten Mikroband ($MB_3'$) der zweiten Sektion (S') verbindet, einen zweiten, geneigten Mikrobandabschnitt ($mb_2$), der das zweite Mikroband ($MB_2$) der ersten Sektion (S), das auf dem zweiten optischen Leiter (G2) angeordnet ist, mit dem zweiten Mikroband ($MB_2'$) der zweiten Sektion (S'), das auf dem ersten optischen Leiter (G1) angeordnet ist, verbindet, und einen dritten, geneigten Mikrobandabschnitt ($mb_3$), der das dritte Mikroband ($MB_3$) der ersten Sektion (S) mit dem ersten Mikroband ($MB_1'$) der zweiten Sektion (S'), das auf dem zweiten optischen Leiter (G2) angeordnet ist, verbindet.

## Claim

1. Electro-optical directional coupler, of the kind comprising a light-propagating structure formed by a substrate containing a first optical wave guide (G1) and a second optical wave guide (G2) parallel with the first one, the structure being covered by a structure of electrodes comprising at least two conductive microbands deposited on the substrate and each covering at least partially one of the two optical guides, the microbands having one end electrically connected respectively to the central conductor and to the external conductor of a coaxial supply line itself connected to an electric wave generator, the other end of the microbands being connected to an adapted load, the structure of electrodes behaving, for the electric supply wave, like a propagating line having a certain characteristic impedance, the dimensions of the microbands, i.e. width and distance apart, being selected so that such characteristic impedance has a predetermined adaptation value, wherein to be able to use a structure with alternating dephasings comprising a succession of sections in which the dephasings between the optical waves propagated in the two guides have opposite signs,
   a) the structure of electrodes comprises in each section a first, a second and a third parallel microband of identical width ($MB_1$, $MB_2$, $MB_3$), the second microband being placed between the first and third, the first ($MB_1$) and second ($MB_2$) microband covering the first (G1) and the second (G2) optical guide respectively, the two microbands being separated by a width giving to the propagating line formed by the two microbands a characteristic impedance equal to the required adaptation impedance, the third microband being far enough away from the second microband for the contribution of the former to such characteristic impedance to be negligible, the first and third microbands being connected electrically to the external conductor of the supply line, and the second microband being connected to the central conductor of such line.
   b) the covering of the first (G1) and second (G2) optical guides by the first and second microbands alternates from one section to the following section in the sense that, for a first section, it is the first microband ($MB_1$) which covers the first guide (G1) and the second microband ($MB_2$) which covers the second guide (G2), while for a second section (S') consecutive to the first section (S), it is the second microband ($MB_2'$) which covers the first guide (G1) and the first microband ($MB_1'$) which covers the second guide (G2).
   c) the passage between the first section and the second section is obtained by a transition zone comprising: a first, inclined microband section ($mb_1$) connecting the first microband ($MB_1$) of the first section (S) situated on the first optical guide (G1) to the third microband ($MB_3'$) of the second section (S'), a second inclined microband section ($mb_2$) connecting the second microband ($MB_2$) of the first section (S) situated on the second optical guide (G2) to the second microband ($MB_2'$) of the second section (S') situated on the first optical guide (G1), and a third inclined microband section ($mb_3$) connecting the third microband ($MB_3$) of the first section (S) to the first microband ($MB_1'$) of the second section (S') situated on the second optical guide (G2).

1/5

# FIG.1

# FIG.2

# FIG.3

2/5

FIG.4

FIG.5

FIG.6

FIG.7a

FIG.7b

FIG.8

# FIG.9

# FIG.10

# FIG.11

# FIG.12

5/5

# FIG.13

a

b

c

d

e

f

g

h

i

j

k

l

m

51 52 50

55 54 53 50

56 54+55

57 56

58 56

59 56

59 54+55

59 3μm

60 54+55

61 60

61 60 62

63 60

3μm